# EUROPEAN PATENT SPECIFICATION

(11) **EP 1 410 876 B1**
(45) Date of publication and mention of the grant of the patent: **09.08.2006**
(21) Application number: 03021361.5
(22) Date of filing: 22.09.2003
(51) Int. Cl.: B23Q 11/08

(54) **Telescopic guard particularly for machine tools**
Teleskopabdeckung insbesondere für Werkzeugmaschine
Recouvrement télescopique en particulier pour machines-outils

(30) Priority: 17.10.2002 IT PR20020056
(43) Date of publication of application: 21.04.2004
(73) Proprietor: Tecnimetal International S.r.L., 26037 San Giovanni In Croce (Cremona) (IT)
(72) Inventor: Borrini, Matteo, 26037 San Giovanni in Croce (Cremona) (IT)
(74) Representative: Guareschi, Antonella

(56) References cited:
- DE-A- 1 808 334
- DE-B- 1 262 735
- DE-C- 949 139
- US-A- 3 565 153

## Description

This invention relates to a telescopic guard particularly for machine tools, of the type comprising a plurality of box-like elements mutually connected and slidingly insertable inside each other, as defined in the preamble of claim 1, as for example known from DE-A-1 808 334.

As it is known, telescopic guards are used to protect screws, beds and/or guides of machine tools from external elements which can impair their operation and life. Particularly, said guards are an effective protection against dirtiness, chips, cooling liquids or lubricants, and occasional shocks of tools or equipment.

Telescopic guards also avoids injuries, moreover they make aesthetically pleasant the machine tools.

Telescopic guards traditionally comprise a plurality of box-like elements shaped to be slidingly insertable inside each other.

The box-like elements have a cross-section shaped to engage one or more guides of a machine tools and are provided in their front or rear cross-section with a stop element located perpendicularly to the sliding movement of the box-like element. This stop element is for avoiding a casual disengagement of two adjacent box-like elements of the same telescopic guard. In particular, the stop element of a first box-like element abuts an abutment located on a second box-like element which prevents the disengagement of the two box-like elements both during the step of retracting the telescopic guard and during the step of deploying the same.

According to a first prior art, the box-like elements are mutually connected by a pantograph having a first end connected to a box-like element integral with a frame of the machine tool, and a second end connected to the box-like element which is the farthest from the former box-like element, when the telescopic guard is completely deployed.

The pantograph is additionally hinged to the other box-like elements and particularly it has a hinge point on each box-like elements. Thus, the deployment and retraction of the telescopic guard are controlled by the "bellows" operation of the pantograph which allows each box-like elements to move at constant speed both during the step of deploying and retracting the telescopic guard.

The schematically described connection of the box-like element by the pantograph has some important drawbacks.

First of all, the pantograph can be used only with small size telescopic guards having a small number of box-like elements. For example, since each box-like element moves at constant speed both during the deployment and retraction (consequently the guard deployment is almost instantaneously) and the rigidity of the pantograph, there are very high stresses in the connecting points between the pantograph and each box-like elements. This is extremely disadvantageous because the connecting points between the pantograph and each box-like element usually comprise pins having very small diameter and therefore they are not adapted to withstand tensile and/or compression stresses

Secondly, the pantograph is not able to dampen the box-like elements movement, causing the telescopic guard to withstand sudden high accelerations and decelerations. Consequently the pantograph can be used only with "slow" telescopic guards, in other words, with speeds positively less than 60 m/min and accelerations less than 1 g.

According to a second prior art, there are telescopic guards having box-like elements connected two by two by means of intermediate oleo or air dampers mutually independent.

However, this prior art despite the fact is capable of absorbing the substantial accelerations and decelerations of the step of deploying and retracting the telescopic guard, has the drawback of jamming frequently during the telescopic guard operation. Indeed, because the dampers are attached only in their ends and are mutually independent, they can "get stuck" during the step of deploying and retracting the guard, positioning perpendicularly to the sliding movement of the box-like elements.

The object of the present invention is to solve the above mentioned drawbacks with a high speed telescopic guard, particularly for machine tools, in other words capable to operate at sliding speeds of the box-like elements between 40 m/min and 100 m/min and acceleration up to about 2 g.

Another object of the present invention is a telescopic guard provided with a connection between the box-like elements capable of keeping them parallel when they slide.

Another object of the present invention is a telescopic guard provided with a connection between the box-like elements easy to service and whose parameters such as speed and acceleration can be easily modified in dependence of the use of the guard.

A further object consists of obtaining the above mentioned advantages with a structure which is both inexpensive and reliable.

Said objects are fully met by a telescopic guard, particularly for machine tools, which is the object of the present invention as defined in claim 1.

These and other characteristics will be better understood by the following description of a preferred embodiment shown as an illustrative non limiting example in the following drawings, wherein:
- figure 1 is a perspective complete view of a telescopic guard according to the invention;
- figure 1a is an enlarged view of a constructive detail of the connection between a box-like element and an actuator;
- figure 1b is an enlarged view of a constructive detail of the connection between two actuators;
- figure 2 is a partial cross-section side view of a first embodiment of actuators connecting box-like elements;
- figure 3 is a plan view of a constructive detail of the actuators of figure 1b;
- figure 4 is a partial cross-section side view of a second embodiment of the actuators connecting the box-like elements.

Referring to the figures, the telescopic guard made of steel sheet has been generally shown by number 1.

Guard 1 comprises a plurality of box-like elements 2 reciprocally connected and slidingly movable with respect to each other. In the described embodiment, the box-like elements can at least partially fit inside each other during the step of deploying the guard 1.

The adjacent box-like elements are connected to each other by at least a pair of resilient or fluid actuators 3, each having a first end 3a attached to a portion 2a of a first box-like element and a second end 3b attached to a portion 2b of a second box-like element. Specifically, these actuators 3 are hinged to each other at their intermediate region.

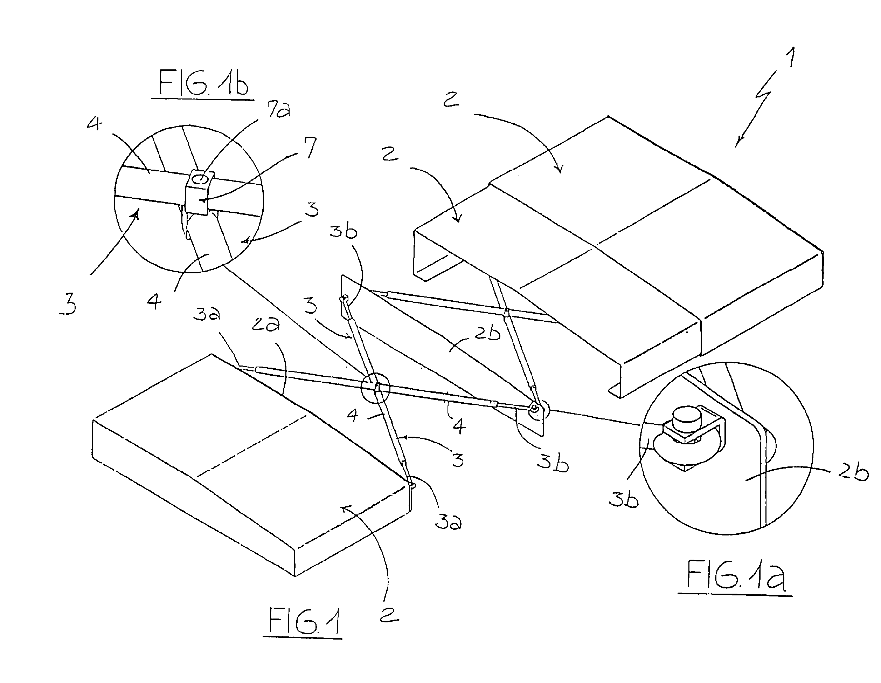

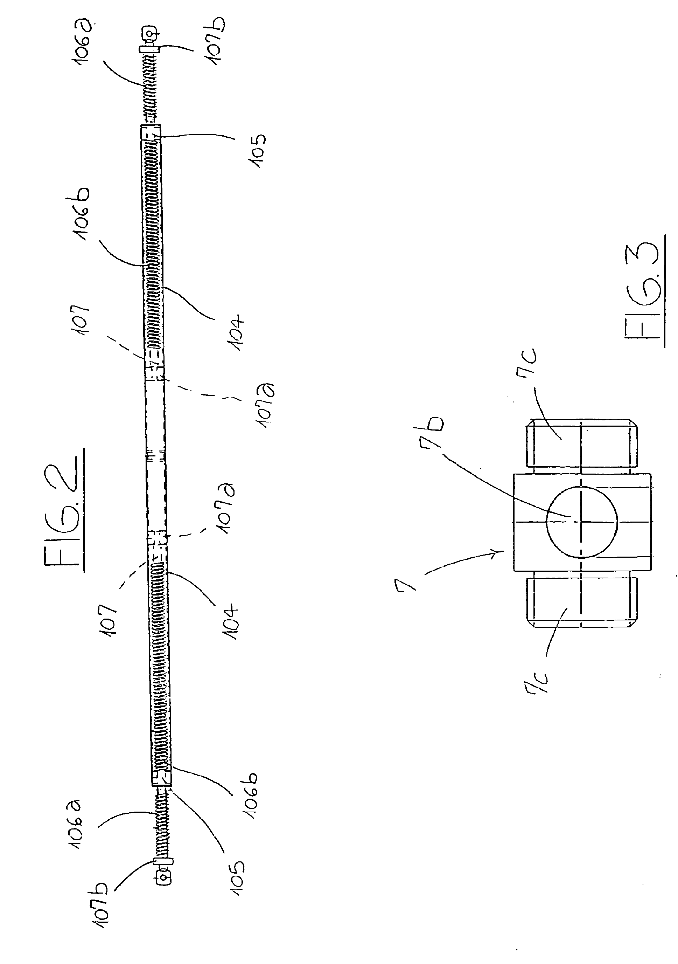

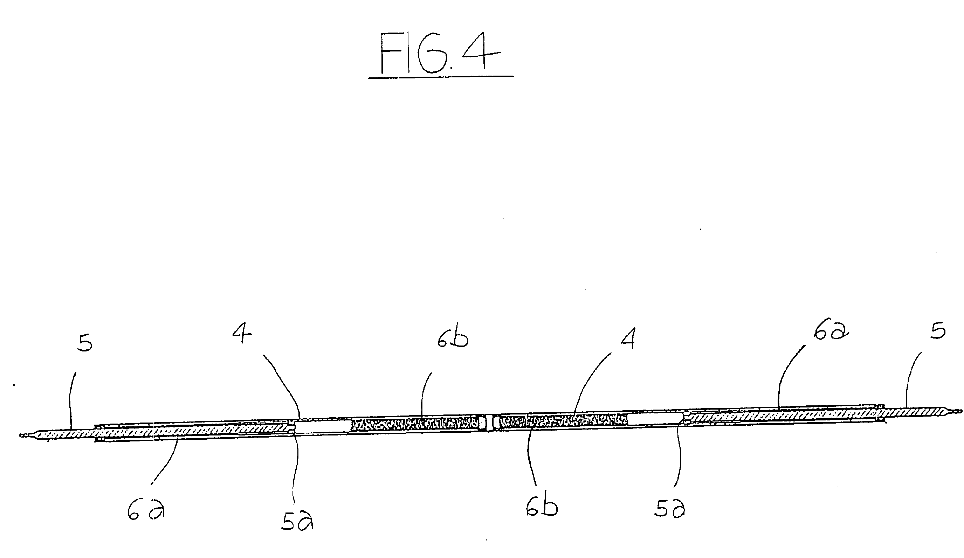

Referring to figure 1a, ends 3a, 3b of actuators 3 are hinged to the portions 2a, 2b of the box-like elements.

Referring to figure 4, each resilient actuator comprises a tubular body 4 slidingly receiving a piston or stem 5 connected to at least one resilient element also received inside the tubular body 4. In particular, piston 5 is located between two coiled springs 6a, 6b positioned respectively in the front and in the back of a head 5a of the piston 5. In the preferred embodiment, spring 6a is preferably coaxial with stem 5. In this way, the piston head 5a is urged by an elastic force both during the step of deploying the guard 1 and during the step of retracting the same. The above described resilient actuators 3 allow the guard 1 to accurately move and operate very quickly.

Referring particularly to figures 1, 1b and 4, the preferred embodiment comprises two pairs of resilient actuators 3, the tubular bodies 4 of each pair are parallel and connected by a bush 7 and the ends of pistons 5 are connected to portions 2a, 2b of adjacent box-like elements, respectively. In other words, these pairs of actuators are substantially two rod-like elements hinged to each other in their intermediate part by a pin 7a received in coaxial through holes 7b defined in said connecting bushes 7.

Tubular bodies 4 have threaded ends which are screwed in respective threaded portions 7c of the bush 7.

In an alternative embodiment, not shown, fluid actuators are provided comprising a piston slidingly fit inside a tubular body, said piston being typically immersed in air or oil.

In the embodiment shown in figure 2, each resilient actuator comprises a tubular body 104, one of its ends is engaged with a bush 105 connected with at least one resilient element. In particular, bush 105 is located between two coiled springs 106a, 106b respectively located outside and inside the tubular body 104.

This bush 105 is designed for closing the tubular body 104 and driving the piston or stem 107 slidingly fitted inside the tubular body.

This piston 107 has a head 107a inside the tubular body 104 and acting on the inner spring 106b, during the extension of the resilient spring.

In addition, piston 107 is provided with a second head 107b external to the tubular body 104 and acting on the outer spring 106a, during the retraction of the resilient actuator.

In this way, piston 107 is urged by an elastic force pushing both during the step of deploying the guard and during the step of retracting the same.

Also this embodiment is provided with two pairs of resilient actuators such as the above described embodiment and shown in figures 1, 1b, and 4.

The operation is as follows.

The movement of one box-like element is transferred to the adjacent box-element by the actuators 3 which are rotated around a vertical axis crossing the connecting pin 7a.

The actuators 3 has therefore a scissor-like movement, indeed they can move from a position wherein the tubular bodies 4 are perfectly parallel to a "crossed" position wherein the angle between the tubular bodies varying according to the position of the connecting points the ends 3a, 3b of the actuators and the portions 2a, 2b of the box-like elements.

The advantages of the invention are the following.

First of all, this telescopic guard is particularly adapted for machine tools wherein the guard must deploy or retract at high speed and also with a very high acceleration. Moreover, the telescopic guard according to the present invention provides speeds of the box-like elements in the range of 40 m/min - 100 m/min with an acceleration speed of about 2g.

Second, said telescopic guard allows the box-like elements to accurately and parallely operate when they slide. Specifically, the presence of the connecting hinge between the actuators prevents them from jamming and/or getting stuck during the deploying of the guard.

Moreover, the resilient actuator advantageously requires less maintenance than the fluid actuators and can be also adapted to meet determined requirements. For example, it suffices to substitute the springs acting on the pistons in order to obtain greater or less operational speed.

Another advantage is due to the presence of the pair of springs acting on the same piston (one on the front and the other on the rear) which allow "to slow" the operation of the telescopic guard because they absorb possible stresses generated both during the step of deploying and retracting. Particularly, a telescopic guard, according to the invention, solves the problems of operation rigidity typical of the prior art particularly of the pantograph approach.

Advantageously, a telescopic guard according to the invention is inexpensive and easy to build.

## Claims

1. Telescopic guard (1), particularly for machine tools, of the type comprising a plurality of box-like elements (2) reciprocally connected and slidingly movable with respect to each other, adjacent box-like elements (2) are connected to each other by at least a pair of resilient and/or fluid actuators (3) having each a first end (3a) attached to a portion (2a) of a first box-like element (2) and a second end (3b) attached to a portion (2b) of a second box-like element (2), **characterized by** fact that the actuators (3) are hinged to each other in their intermediate region by a pin (7a) received in coaxial through holes (7b) defined in said connecting bushes (7) and each actuator (3) comprising
a tubular body (4,104) having threaded ends which are screwed in respective threaded portions (7c) of the bush (7);
a piston or stem (5,107) slidingly inserted in the tubular body (4,104);
a pair of resilient elements (6a, 6b) or (106a, 106b) operatively acting on the piston (5, 107); in this way, the piston (5, 107) is urged by an elastic force both during the step of deploying the guard (1) and during the step of retracting the same.

2. Telescopic guard according to claim 1, **characterized by** the fact said tubular body (4,104) have threaded ends which are screwed in respective threaded portions (7c) of the bush (7).

3. Telescopic guard according to claim 1, **characterized by** the fact said pair of resilient elements (6a, 6b) are located respectively in the front and in the back of a head 5a of the piston 5.

4. Telescopic guard according to claim 1, **characterized by** the fact said one first resilient element (106b) is received inside the tubular body (104) and operatively acting on a head (107a) of the piston (107) arranged inside the tubular body (104), while said second resilient element (106a) is arranged outside the tubular body (104) and operatively acting on a head (107b) of the piston (107) arranged externally the tubular body (104).

5. Telescopic guard according to claim 1, **characterized by** the fact said second resilient element (106b) abutting on said bush (105) and said first resilient element (106b) abutting on a bush (105) closing an end of the tubular body (104).

6. Telescopic guard according to claim 1, **characterized by** the fact that each of said fluid actuators (3) comprises:
a tubular body containing a fluid;
a piston slidingly received in the tubular body and surrounded by the fluid.

7. Telescopic guard according to claim 6, **characterized by** the fact that said fluid is air.

8. Telescopic guard according to claim 6, **characterized by** the fact that said fluid is oil.

9. Telescopic guard according to claim 6, **characterized by** the fact that the box-like elements (2) can be at least partially fitted inside each other.

10. Machine tool **characterized by** the fact it comprises a telescopic guard (1) according to any of the preceding claims.

## Patentansprüche

1. Teleskopschutz (1), insbesondere für Werkzeugmaschinen, der Art umfassend eine Vielzahl von miteinander verbundenen und gegeneinander verschiebbaren kastenartigen Elementen (2), wobei nebeneinander liegende kastenartige Elemente (2) durch mindestens ein Paar Feder- bzw. Fluidaktuatoren (3) miteinander verbunden sind, welche jeweils ein erstes Ende (3a) aufweisen, das mit einem Bereich (2a) eines ersten kastenartigen Elementes (2) verbunden ist, sowie ein zweites Ende (3b), das mit einem Bereich (2b) eines zweiten kastenartigen Elementes (2) verbunden ist, **dadurch gekennzeichnet, dass** die Aktuatoren (3) in ihrem mittleren Bereich durch einen Stift (7a) aneinander angelenkt sind, der in koaxialen, in den genannten Hülsen (7)) ausgebildeten Durchgangslöchern (7b) aufgenommen ist, und wobei jeder Aktuator (3) umfasst
einen rohrförmigen Körper (4, 104) mit gewindeförmig ausgebildeten Enden, welche in entsprechende Gewindebereiche (7c) der Hülse (7) geschraubt sind;
einen Kolben oder eine Kolbenstange (5, 107), der bzw. die verschiebbar in dem rohrförmigen Körper (4, 104) aufgenommen ist;
ein Paar Federelemente (6a, 6b) oder (106a, 106b) die auf den Kolben (5; 107) einwirken; hierdurch wird der Kolben (5, 107) sowohl beim Ausfahren des Schutzes (1) als auch beim Einfahren desselben durch eine Federkraft beaufschlagt.

2. Teleskopschutz nach Anspruch 1, **dadurch gekennzeichnet, dass** der genannte rohrförmige Körper (4, 104) gewindeförmig ausgebildete Enden aufweist, welche in entsprechende Gewindebereiche (7c) der Hülse (7) geschraubt sind.

3. Teleskopschutz nach Anspruch 1, **dadurch gekennzeichnet, dass** das genannte Paar Federelemente (6a, 6b) jeweils vor und hinter einem Kopf 5a des Kolbens 5 angeordnet ist.

4. Teleskopschutz nach Anspruch 1, **dadurch gekennzeichnet, dass** das eine genannte erste Federelement (106b) im Inneren des rohrförmigen Körpers (104) aufgenommen ist und auf einen Kopf (107a) des Kolbens (107), der im Inneren des rohrförmigen Körpers (104) angeordnet ist, während das genannte zweite Federelement (106a) ausserhalb des rohrförmigen Körpers (104) angeordnet ist und auf einen Kopf (107b) des Kolbens (107) einwirkt, der ausserhalb des rohrförmigen Körpers (104) angeordnet ist.

5. Teleskopschutz nach Anspruch 1, **dadurch gekennzeichnet, dass** sich das genannte zweite Federelement (106b) an der genannten Hülse (105) abstützt und sich das genannte erste Federelement (106b) an einer ein Ende des rohrförmigen Körpers (104) abschliessenden Hülse (105) abstützt.

6. Teleskopschutz nach Anspruch 1, **dadurch gekennzeichnet, dass** jeder der genannten Fluidaktuatoren (3) umfasst:
einen rohrförmigen ein Medium enthaltenden Körper;
einen verschiebbar in dem rohrförmigen Körper aufgenommenen Kolben, welcher von dem Medium umgeben ist.

7. Teleskopschutz nach Anspruch 6, **dadurch gekennzeichnet, dass** das genannte Medium Luft ist.

8. Teleskopschutz nach Anspruch 6, **dadurch gekennzeichnet, dass** das genannte Medium Öl ist.

9. Teleskopschutz nach Anspruch 6, **dadurch gekennzeichnet, dass** die kastenartigen Elemente (2) zumindest teilweise ineinander verschachtelbar sind.

10. Werkzeugmaschine **dadurch gekennzeichnet, dass** sie einen Teleskopschutz (1) nach einem der vorhergehenden Ansprüche umfasst.

## Revendications

1. Protecteur télescopique (1), en particulier pour des machines-outils, du type comprenant une pluralité d'éléments en forme de boîte (2) reliés entre eux et mobiles de manière coulissante l'un par rapport à l'autre, les éléments en forme de boîte (2) adjacents étant reliés entre eux par au moins une paire d'actionneurs résilients et/ou fluides (3) ayant chacun une première extrémité (3a) fixée à une portion (2a) d'un premier élément en forme de boîte (2) et une seconde extrémité (3b) fixée à une portion (2b) d'un second élément en forme de boîte (2), **caractérisé en ce que** les actionneurs (3) sont articulés entre eux dans leur zone intermédiaire par un axe (7a) logé dans des orifices passants coaxiaux (7b) définis lesdits manchons de connexion (7) et chaque actionneur (3) comprenant:
un corps tubulaire (4, 104) ayant des extrémités filetées qui sont vissées dans de respectives portions taraudées (7c) du manchon (7);
un piston ou tige (5, 107) inséré de manière coulissante dans le corps tubulaire (4, 104);
une paire d'éléments résilients (6a, 6b) ou (106a, 106b) agissant de manière opérationnelle sur le piston (5, 107); de cette manière, le piston (5, 107) est poussé par une force élastique aussi bien pendant la phase de déploiement du protecteur (1) que pendant la phase de rétraction de ce dernier.

2. Protecteur télescopique selon la revendication 1, **caractérisé du fait que** ledit corps tubulaire (4, 104) présente des extrémités filetées qui sont vissées dans de respectives portions taraudées (7c) du manchon (7).

3. Protecteur télescopique selon la revendication 1, **caractérisé du fait que** ladite paire d'éléments résilients (6a, 6b) est située respectivement sur la partie antérieure et sur la partie postérieure d'une tête (5a) du piston (5).

4. Protecteur télescopique selon la revendication 1, **caractérisé en ce que** ledit premier élément résilient (106b) est logé à l'intérieur du corps tubulaire (104) et agit opérationnellement sur une tête (107a) du piston (107) disposée à l'intérieur du corps tubulaire (104), alors que ledit second élément résilient (106a) est disposé à l'extérieur du corps tubulaire (104) et agit opérationnellement sur une tête (107b) du piston (107) disposée à l'extérieur du corps tubulaire (104).

5. Protecteur télescopique selon la revendication 1, **caractérisé en ce que** ledit second élément résilient (106b) est en butée sur ledit manchon (105) et que ledit premier élément résilient (106b) est en butée sur un manchon (105) fermant une extrémité du corps tubulaire (104).

6. Protecteur télescopique selon la revendication 1, **caractérisé en ce que** chacun desdits actionneurs fluides (3) comprend:
un corps tubulaire contenant un fluide;
un piston logé de manière coulissante dans le corps tubulaire et entouré par le fluide.

7. Protecteur télescopique selon la revendication 6, **caractérisé en ce que** ledit fluide est de l'air.

8. Protecteur télescopique selon la revendication 6, **caractérisé en ce que** ledit fluide est de l'huile.

9. Protecteur télescopique selon la revendication 6, **caractérisé en ce que** les éléments en forme de boîte (2) peuvent être partiellement insérés l'un dans l'autre.

10. Machine-outil **caractérisée en ce qu'**elle comprend un protecteur télescopique (1) selon n'importe laquelle des revendications précédentes.
